# EUROPÄISCHE PATENTSCHRIFT

(11) **EP 0 461 571 B1**
(45) Veröffentlichungstag und Bekanntmachung des Hinweises auf die Patenterteilung: **02.01.1997**
(21) Anmeldenummer: 91109436.5
(22) Anmeldetag: 08.06.1991
(51) Int. Cl.: H04M 1/72, H04Q 7/32, H04B 1/38

(54) **Funkgerätekombination, insbesondere Kombination von schnurlosem Telefonapparat und Funkrufempfänger**
Combined radio apparatus, in particular combination of a cordless telephone and a paging receiver
Appareil radio combiné, combinaison d'un téléphone sans fil et d'un récepteur d'appel par radio en particulier

(30) Priorität: 13.06.1990 DE 4019010
(43) Veröffentlichungstag der Anmeldung: 18.12.1991
(73) Patentinhaber: GRUNDIG E.M.V. Elektro-Mechanische Versuchsanstalt Max Grundig GmbH & Co. KG, D-90762 Fürth (DE)
(72) Erfinder: Bauerschmidt, Werner, Grundig E.M.V. Elektro-Mech., Kurgartenstrasse 37, W-8510 Fuerth (DE)

(56) Entgegenhaltungen:
- EP-A- 0 369 123
- US-A- 4 481 382
- US-A- 4 644 347
- US-A- 4 747 122
- US-A- 4 849 750

## Beschreibung

Die Erfindung betrifft ein Funkgerät für den Zugang zu verschiedenen Funkdiensten gemäß dem Oberbegriff des Patentanspruchs 1.

Um den Bewegungsbereich des Benutzer noch mehr zu erweitern, werden in verschiedenen Ländern zunehmend sogenannte schnurlose Telefonapparate (cordless telephone) eingesetzt. Die Informationsübertragung zwischen einer Basisstation und der zugehörigen Mobilstation des schnurlosen Telefonapparates erfolgt über ein Funkübertragungskanalpaar. Die Basisstation wird mittels einer Verbindungsdose an das Femmeldenetz angeschlossen, so daß für den Benutzer beispielsweise der Zugang zum öffentlichen Fernsprechnetz möglich ist.

Dadurch, daß die Basisstation und die Mobilstation über einen Funkübertragungskanal miteinander in Verbindung stehen, ist der Bewegungsbereich des Benutzers auf einen Umkreis bis zu 200 m zum jeweiligen Anschluß (Verbindungsdose) erweitert.

In der Bundesrepublik Deutschland stehen derzeit für die Informationsübertragung 80 Funkkanäle zur Verfügung, welche im Frequenzbereich von 900 MHz liegen. Mit der obengenannten Übertragungsreichweite ergibt sich für die Belegung des gleichen Funkkanals durch zueinander benachbarte schnurlose Telefonapparate eine geringe Belegwahrscheinlichkeit. Liegt ein Verbindungswunsch vor, so wird von einer im Empfänger von Mobilstation und Basisstation angeordneten Sendersuchlaufeinrichtung ein Suchlauf nach einem freien Funkübertragungskanal gestartet und das Funkübertragungskanalpaar belegt. Um sicherzustellen, daß die zwischen den beiden Stationen des schnurlosen Telefonapparates übertragenen Nachrichten von keinem anderen schnurlosen Telefonapparat mitgehört werden können, daß die Gebührenzuordnung sichergestellt ist und daß die Zuordnung der Funkübertragungskanalpaare eindeutig ist, ist jedem schnurlosen Telefonapparat eine Kennung zugeordnet, welche von der Fernsprechteilnehmernummer des Fernsprechteilnehmers unabhängig ist.

Bei der Basisstation löst ein von der zugehörigen Steuereinrichtung erkannter ankommender Ruf auf der Amtsleitung die Funkkanalsuche aus. Durch Betätigen der Gabelumschalt-Taste wird in der Mobilstation die Funkkanalsuche eingeleitet. In der EP-B1-0 074 940 ist der dabei vorgenommene Kennungsaustausch näher beschrieben und erläutert. Ein als frei erkannter Funkübertragungskanal wird belegt, der Sender aktiviert und die Kennung als Datentelegramm über den Funkübertragungskanal gesendet. Nach dem Senden jeder Kennung wird auf ein Quittungstelegramm (Kennung) der entsprechenden Gegenstation gewartet. Wird die Kennung (Quittungstelegramm) der Gegenstation empfangen, so wird diese von einer in den jeweiligen Stationen angeordneten Einrichtung mit der eigenen Kennung verglichen. Bei Übereinstimmung wird von der mit der Einrichtung verbundenen Steuereinrichtung die Verbindung durchgeschaltet, die Kennungsausgabe eingestellt und die bestehende Funkverbindung überwacht.

Eine weitere Anwendung für schnurlose Telefonapparate ist bei öffentlichen Telepoint-Diensten gegeben. Beim Telepoint-Dienst sind die Basisstationen an öffentlichen Stellen, wie etwa an großen Plätzen, Bahnhöfen, Flughäfen, Einkaufszentren, Autobahnraststätten, usw. installiert. Der Besitzer eines geeigneten Handapparates (Mobilteil) kann im Umkreis von einigen 100 Metern einer solchen Basisstation an das öffentliche Fernsprechnetz gelangen, um Gespräche zu führen.

Eine solche Telepoint-Basisstation benötigt den Zugriff zu einer Datenbank, um die Berechtigung der Telepoint-Benutzer zu überprüfen, um die anfallenden Gesprächsgebühren zu verrechnen usw.. Dieser Zugriff erfolgt üblicherweise ebenfalls über das öffentliche Fernsprechnetz.

Anders als etwa bei einem Autotelefonsystem sollen beim Telepoint-Dienst ausschließlich das bestehende, meist analoge Fernsprechnetz und die Mobilteile der schnurlosen Telefonappparate weiter benutzt werden. Damit erhofft man sich Gesprächsgebühren, die nur unwesentlich über denjenigen eines normalen Telefons liegen. Aus diesem Grund erlauben die Telepoint-Konzepte lediglich abgehende Gespräche; anrufen kann man den Besitzer des Mobilteils beim Telepoint-Dienst nicht.

Um die Erreichbarkeit im häuslichen Bereich oder im Büro zu verbessern, wurde der europäische Funkrufdienst eingeführt, bei dem ein Funkrufempfänger über maximal vier Rufnummern erreichbar ist. In der Funkrufzentrale werden Codesignale gebildet, die dem mit der Funkrufzentrale verbundenen UKW-Sender zur Rufaussendung zugeführt werden. Die ausgesendeten Codesignale werden vom Funkrufempfänger empfangen und decodiert. Bei Übereinstimmung zwischen dem im Decoder eingestellten Code mit dem empfangenen Code werden ein akustisches und ein optisches Signal erzeugt. Die Bedeutung der Codesignale muß zwischen dem Funkrufteilnehmer und dem anrufenden Teilnehmer abgesprochen sein.

Weiterhin ist ein als City-Ruf bezeichneter Funkrufdienst bekannt. Beim City-Ruf werden kurze Informationen als Ziffern oder Texte auf der Anzeigeeinrichtung (Display) des Funkrufempfängers dargestellt. Die Informationsübermittlung ist beim City-Ruf in drei Rufklassen möglich: Nur-Ton für Ton-Funkrufempfänger, die entsprechend wie beim europäischen Funkrufdienst vier verabredete Signale empfangen können; Numeric für Numeric-Funkrufempfänger zum Empfang von bis zu fünfzehn Ziffern oder Sonderzeichen und Alphanumeric für Alphanumeric-Funkrufempfänger zum Empfangen von Text (Ziffern- und Buchstabenfolgen) bis zu achtzig Zeichen.

Der City-Rufdienst wird in regionalen Zonen (sog. Rufzonen) ausgestrahlt, wobei das Versorgungsgebiet in etwa den gesamten Einzugsbereich einer großen Stadt abdeckt.

Das Funkrufnetz besteht aus den Funkrufvermittlungsstellen, den Funkrufkonzentratoren, den Sendern und den Funkrufempfängern. Die Funkrufvermittlungsstelle verwaltet die Teilnehmerdaten und steuert die Sender, über welche ein Ruf ausgestrahlt werden soll. Der Zugang von den öffentlichen, drahtgebundenen Telekommunikationsnetzen (über die Vermittlungsstelle) zum Funkrufnetz ist unter gleicher Zugangskennzahl möglich und hängt nur von der Rufklasse und dem jeweiligen Eingabegerät für die City-Ruf-Informationen oder Mehrwertdienst-Nachrichten ab. Als Eingabegeräte dienen die in der Teilnehmerstelle installierten Endgeräte für die verschiedenen Postdienste, z.B. Fernsprechapparat, Telex-, Teletex- oder Btx-Endgerät. Da Numeric-Funkrufempfänger das Mehrfrequenz-Wählverfahren (MFV) erfordern, sind für eine Ziffern- und Texteingabe von einem einfachen Fernsprechapparat aus besondere Zusatzgeräte, z.B. akustisch ankoppelbare MFV-Geber, erforderlich. Soll von einem Personal- oder Home-Computer eine alphanumerische Information eingegeben werden, so ist dieser mit einem Akustikkoppler oder Modern zu verbinden.

Der City-Ruf kann von den Teilnehmern auch grenzüberschreitend genutzt werden, beispielsweise kann der Funkrufdienst Alphapage in Frankreich, Teledrine in Italien sowie Europage in Großbritannien genutzt werden. Hierzu muß sich der City-Ruf-Teilnehmer in eine internationale europäische Rufzone einbuchen. Für die Verwendung in Funkrufsystemen wurde ein europäischer Standard gemäß "CCIR Radio Paging Code No. 1" (Pocsag-Code gemäß British Post Office Code Standardistation Advisory Group) vereinbart. Die Struktur des Poscag-Codes (beispielsweise in der EP-B1-0 118 153 beschrieben) und der Aufbau der Codewörter (Adreß- und Nachrichten-Codewörter) sind an die Eigenschaften des Funkübertragungskanals angepaßt.

Beim City-Ruf liegt das Frequenzband zwischen 450 und 470 MHz und zur funktechnischen Entkopplung benachbarter Rufzonen mit denselben Frequenzen (f1 = 465,97 MHz, f2 = 466,075 MHz und f3 = 466,23 MHz) werden die Nachrichten (Funkrufe) gemäß dem Zeitschlitzverfahren übertragen. Innerhalb einer Rufzone strahlen die Sender dieselbe Nachricht im Gleichwellenbetrieb ab. Die Dauer der Zeitschlitze ist zur Anpassung an die Verkehrsanforderungen einstellbar. Je nach gemessenem Verkehrswert werden die Funkrufe (Nachrichten) maximal dreimal gesendet. Bei Rufwiederholungen in einer Rufzone wird der Funkruf nur im selben Zeitschlitz wie bei der erstmaligen Aussendung des Funkrufs übertragen. Zum gleichen Funkrufempfänger können vor und zwischen den Rufwiederholungen neue Funkrufe gesendet werden.

Jede Aussendung eines Funkrufs (Übertragungsabschnitt, Zeitschlitz) beginnt mit einer 576 Bit langen Präambel, die aus fortlaufenden Bitwechseln besteht. Die Präambel ermöglicht eine einfache Synchronisation im Decoder des Funkrufempfängers auf den Bittakt. An die Präambel schließen sich Datenblöcke (batches) an, die das Synchronwort und 16 weitere Codewörter enthalten. Die Struktur der Datenblöcke (Codewortgruppe) ist derart gewählt, daß immer zwei Codewörter zu einem Rahmen (frame) zusammengefaßt werden und daß jeder Datenblock acht solcher Rahmen enthält.

Zur Wortsynchronisation wird das Synchroncodewort im Funkrufempfänger ausgewertet. Alle Codewörter haben eine Länge von 32 Bit. Die Frequenzen f2 und f3 werden mit einer Übertragungsrate von 1.200 Baud anstelle von 512 Baud bei der Frequenz f1 genutzt.

Es können vier Typen von Codewörtern unterschieden werden, nämlich Synchron-, Adreß-, Nachrichten- und Füllcodewort. Adreß- und Nachrichtencodewort bestehen aus einem 21 Bit umfassenden Informationsfeld und 11 Prüfbits. Die ersten zehn Prüfbits werden nach den Regeln eines CRC-Verfahrens (cyclic redundancy check) gebildet und das elfte Bit ist ein Paritätsbit, das der Prüfung der geraden Parität des gesamten Codeworts dient. Adreß- und Nachrichtencodewort unterscheiden sich im ersten Bit. Im Adreßcodewort folgen nach dem ersten Bit weitere 18 Bits, welche dem Funkrufempfänger zugeordnet sind und zwei Funktionsbits, welche die Rufklasse (Nur-Ton, Numeric, Alphanumeric) kennzeichnen. Da die drei LSB-Bits des Adreß-Codeworts nicht übertragen werden, sondern die Rahmennummer definieren, in welchem das Adreß-Codewort übertragen wird, beträgt die Gesamtzahl der adressierbaren Funkrufempfänger über zwei Millionen.

Die Menge aller City-Rufempfänger ist in acht Gruppen aufgeteilt. Jeder Funkrufempfänger ist einer dieser acht Gruppen zugeordnet. Da der Funkrufempfänger nur Adreß-Codewörter in dem diesen zugeordneten Rahmen auswertet, kann zur Stromsparung der Funkrufempfänger während der übrigen sieben Rahmen eines Datenblocks ausgeschaltet werden. Auf diese Weise wird nicht nur der Stromverbrauch des Funkrufempfängers reduziert, sondern auch die Anzahl möglicher City-Ruf-Teilnehmer auf das Achtfache erhöht.

Bei einem Anruf setzt die Funkrufvermittlungsstelle (Rufzentrale) die gewählte Teilnehmernummer in ein entsprechendes Codewort um und wählt zur Nachrichtenübertragung die entsprechende Rufzone sowie die Frequenz aus. Die Nachrichten-Codewörter können in jedem Rahmen übertragen werden und folgen unmittelbar dem zugeordneten Adreß-Codewort. Eine Nachricht kann dabei eine beliebige Zahl von Nachrichten-Codewörter umfassen. Wenn es sich um eine längere Nachricht handelt, setzen sich die Nachrichten-Codewörter im nächsten Datenblock fort. Die Nachricht wird im Funkrufempfänger wieder formatiert, bevor diese angezeigt werden kann. In der Regel werden zwei aufeinander folgende Rufe mit Nachrichten durch mindestens einen Ruf der Rufklasse Nur-Ton oder durch ein Füllwort getrennt.

Schließlich ist aus der DE-C-38 39 015 ein schnurloses Telefon bekannt, bei dem das Mobilteil des schnurlosen Telefons zusätzlich die Funktion eines Funkrufempfängers übernimmt. Hierzu wird die im Mobilteil vorhandene Schaltung aus Mikroprozessorschaltung, Bedienungs- und Anzeigeelementen mitbenutzt, um die vom Mobilteil empfangene Nachricht zu formatieren und anzuzeigen. Eine Anregung wie die Kombination aus Mobilteil und Funkrufempfänger realisiert werden kann, ist dem Gegenstand der DE-C-38 39 015 nicht zu entnehmen.

Schließlich ist aus der US-A-4,481,382 ein programmierbares Telefonsystem bekannt. Bei dem daraus bekannten Kombinationsgerät aus Gerät der Telekommunikationsgerät und Gerät der Unterhaltungselektronik ist beim Überschreiten des Funkversorgungsgebiets die automatische Umschaltung des Kombinationsgeräts auf eine sogenannte Beeper-Funktion vorgesehen.

Der Erfindung liegt die Aufgabe zugrunde, ein Funkgerät, insbesondere aus Mobilteil und Funkrufempfänger der aus der DE-C-38 39 015 genannten Art derart weiterzubilden, daß der für die Multidienstfähigkeit erforderliche Schaltungsaufwand gering ist.

Diese Aufgabe wird bei einem gattungsgemäßen Funkgerät durch die kennzeichnenden Merkmale des Patentanspruchs 1 gelöst.

Das erfindungsgemäße Funkgerät weist den Vorteil auf, daß nur eine einzige Empfängereinrichtung für den Zugang zu verschiedenen Fernmeldediensten erforderlich ist. Durch die Mitbenutzung von Modulen der Empfängereinrichtung ist nicht nur der für die Multidienstfähigkeit erforderliche Schaltungsaufwand gering, sondern auf überraschend einfache Art und Weise wird eine bei einem Zweiempfängerkonzept möglicherweise auftretende gegenseitige Beeinflussung der beiden Empfänger zuverlässig vermieden. In jeder Phase des Übermittlungsvorgangs im Mobilteil ist eine hohe Übertragungssicherheit erreichbar, so daß die Voraussetzung für eine hohe Auswertesicherheit der empfangenen Nachrichten durch den Mikroprozessor gegeben ist.

Durch die Anordnung der Schalteinrichtung zwischen erstem und zweitem Mischer kann in vorteilhafter Weise die erste Zwischenfrequenz gleich der Empfangsfrequenz des Rufempfängers gewählt werden.

Die Ausführungsform des Funkgeräts gemäß Anspruch 2 weist den Vorteil auf, daß die beiden Antennen für die jeweilige Benutzung optimal gestaltet und dimensioniert werden können. Ist die Antenne im Gehäuse des Funkgeräts integriert, so kann durch eine Ringantenne der zur Verfügung stehende Raum ausgenutzt und auf einfache Art und Weise die abgreifbare Antennenspannung erhöht werden.

Ist gemäß der Ausführungsform nach Patentanspruch 3 der erste Mischer als Verstärker schaltbar (z.B. durch Abschalten des Oszillatorsignals), so kann der Schaltungsaufwand weiter verringert werden, da im Vergleich zur Ausführungsform nach Patentanspruch 2 nur eine Antenne im Mobilteil erforderlich ist.

Die Ausführungsform nach Patentanspruch 4, bei der der Mikroprozessor die Funktion einer Sendersuchlaufeinrichtung übernimmt und abwechselnd die Funkübertragungskanäle auf das Vorliegen eines Verbindungswunsches abtastet, weist den Vorteil auf, daß ein stromsparender Betrieb des Funkgeräts ermöglicht wird.

Moderne Teilnehmereinrichtungen, insbesondere schnurlose Telefonapparate oder Funkgeräte, z.B. Autotelefon, weisen in der Regel eine Wählhilfe, insbesondere eine automatische Wähleinrichtung, auf. Wird gemäß der Ausführungsform nach Patentanspruch 5 der hierfür erforderliche Speicher mitbenutzt, um die über den Rufdienst kommenden Daten, insbesondere Rufnummern, zu speichern, so wird dem Benutzer auf überraschend einfache Art und Weise ein hoher Bedienkomfort geboten. Der Benutzer kann dabei in beim schnurlosen Telefonapparat gewohnter Weise unter Mitbenutzung der Wählhilfe die Verbindung zu einem anrufenden Teilnehmer herstellen.

Die Ausführungsform des Funkgeräts nach Anspruch 6 weist den Vorteil auf, daß für die über das Funkrufsystem übermittelten Nachrichten, die erforderliche Speicherkapazität verringert werden kann. Es ist dabei lediglich die Speicherung einer Markierung für die betreffenden Rufnummem notwendig.

Werden gemäß der Ausführungsform des Funkgeräts nach Anspruch 7 auch die einer Rufnummer zugeordneten Daten an der Anzeigeeinrichtung dargestellt, so wird der Bedienkomfort für den Benutzer weiter erhöht. Durch die automatische Ergänzung der Rufnummer mit den im Speicher vorhandenen Daten kann der Benutzer sofort erkennen, um welchen Gesprächspartner es sich handeln wird.

Die Erfindung wird im folgenden anhand einer in der Zeichnung dargestellten Ausführungsform näher beschrieben und erläutert.

Es zeigt:
Fig. 1 eine Ausführungsform der Benutzeroberfläche in Ansicht und
Fig. 2 das Blockschaltbild der in Fig. 1 dargestellten Ausführungsform.

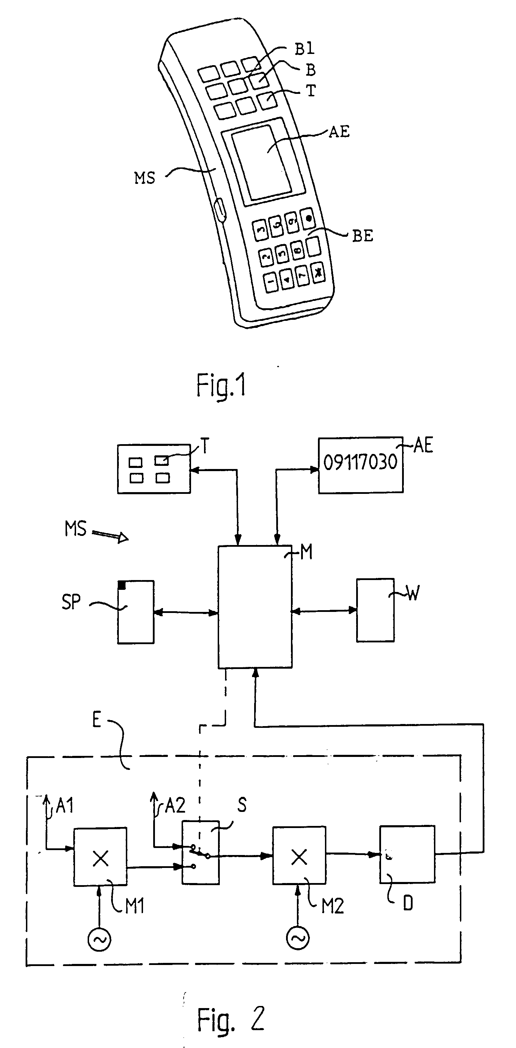

Bei der in Fig. 1 dargestellten Ausführungsform der Benutzeroberfläche ist die Tastatur geteilt und beispielsweise die für die Steuerung des telepointfähigen Mobilteils oder Mobilteils eines schnurlosen Telefonapparats erforderlichen Bedienungselemente BE unterhalb angeordnet. Die Bedienungselemente B bzw. B1 zur Steuerung einer Anzeigeeinrichtung AE (für die Darstellung von über den Funkrufdienst empfangenen Daten) bzw. zur Änderung der Konfiguration einer Empfängereinrichtung E (siehe Fig. 2) und eine Taste T (zum Abruf im Speicher SP gespeicherter Rufnummem und/der Daten; siehe Fig. 2) sind oberhalb der Anzeigeeinrichtung AE des Mobilteils MS angeordnet.

Bei der nachfolgenden Erläuterung des erfindungsgemäßen Funkgeräts wird von der Anwendung bei einem schnurlosen Telefonapparat kombiniert mit einem Funkrufempfänger ausgegangen. Der Einsatz auch in anderen Nachrichtennetzen für vermittelte Verbindungen, beispielsweise bei einem Autotelefonsystem, ist ebenfalls möglich.

Fig. 2 zeigt das Blockschaltbild des Mobilteils MS mit integriertem Funkrufempfänger. Die vom empfangsbereiten Mobilteil MS empfangenen Nachrichten, beispielsweise über das Funkrufsystem übermittelte Nachrichten, werden im Speicher SP zwischengespeichert, decodiert (Mikroprozessor M) und an der Anzeigeeinrichtung AE angezeigt. Der Speicher SP ist beispielsweise ein batteriegestützes RAM, ein NOV-RAM (Nonvolatile Random Access Memory) oder ein EEPROM (Electrically Erasable Programmable Read Only Memory).

Die Empfängereinrichtung E besteht aus einem ersten und zweiten Mischer M1, M2 und einem mit dem zweiten Mischer M2 verbundenen Demodulator D. Bei der in Fig. 2 dargestellten Ausführungsform ist zwischen erstem und zweitem Mischer M1, M2 eine Schalteinrichtung S angeordnet. Die beiden Eingänge der Schalteinrichtung S sind mit zwei Antennen A1, A2 verbunden und der Ausgang der Schalteinrichtung S ist an dem Eingang des zweiten Mischers M2 angeschlossen.

Durch den Benutzer (Betätigung einer der Bedienelemente B1) oder automatisch durch den Mikroprozessor M ist die Konfiguration der Empfängereinrichtung E änderbar. In der automatischen Betriebsweise übernimmt der Mikroprozessor M die Funktion einer Sendersuchlaufeinrichtung und tastet abwechselnd alle oder einige Funkübertragungskanäle des schnurlosen Telefonapparats und des Funkrufdienstes auf das Vorliegen eines Verbindungswunsches ab.

Schließlich ist im Mobilteil MS eine mit dem Mikroprozessor M verbundene Wählhilfe W angeordnet, welche die vom rufenden Teilnehmer kommenden oder vom Benutzer eingegebenen Daten und/oder Rufnummern im Speicher SP speichert. Durch Betätigen einer Taste T werden die im Speicher SP gespeicherten Rufnummern und/oder Daten abgerufen und an der mit der Wählhilfe W und dem Mikroprozessor M verbundenen Anzeigeeinrichtung AE dargestellt. Anhand der angezeigten Rufnummer steuert die Wählhilfe W den Verbindungsaufbau zum rufenden Teilnehmer. Zur besseren Ausnutzung des Speichers SP vergleicht die Wählhilfe W automatisch die vom rufenden Teilnehmer kommenden Rufnummern mit den im Speicher SP enthaltenen Rufnummern und legt nur die noch nicht als bereits vorhanden erkannten Rufnummern auf freie Speicherplätze des Speichers SP ab. Zur Erhöhung des Bedienungskomforts liest die Wählhilfe W - im Falle übereinstimmender Rufnummern - die dieser Rufnummer zugeordneten Daten aus dem Speicher SP aus und stellt diese an der Anzeigeeinrichtung AE dar.

## Patentansprüche

1. Funkgerät für den Zugang zu verschiedenen Funkdiensten, mit einem Mobilteil (MS) eines schnurlosen Telefonapparats oder mit einem telepoinffähigen Mobilteil (MS) und mit einem im Mobilteil (MS) integrierten Funkrufempfänger, und mit einer im Mobilteil (MS) angeordneten Schaltung, bestehend aus Mikroprozessor (M), Bedienungselementen (BE) und Anzeigeelementen (AE),
**dadurch gekennzeichnet,** daß eine einzige, im Mobilteil angeordnete Empfängereinrichtung (E) vorgesehen ist die zwei Mischer (M1,M2) und einen Demodulator (D) aufweist, und
zwischen dem ersten und dem zweiten Mischer (M1, M2) eine Schalteinrichtung (S) angeordnet ist, wodurch einerseits der Zugang zu verschiedenen Fernmeldediensten ermöglicht wird und andererseits durch den Benutzer oder automatisch durch den Mikroprozessor (M) die Konfiguration von Modulen der Empfängereinrichtung (E) änderbar ist.

2. Funkgerät nach Anspruch 1, **dadurch gekennzeichnet,** daß das Mobilteil (MS) zwei Antennen (A1, A2) aufweist und daß die Schalteinrichtung (S), deren Ausgang an den zweiten Mischer (M2) angeschlossen ist, entweder mit dem ersten Mischer (M1) oder mit einer der beiden Antennen (A1, A2) verbunden ist.

3. Funkgerät nach Anspruch 1 oder 2, **dadurch gekennzeichnet,** daß der erste Mischer (M1) als Verstärker schaltbar ist und daß mit dem zweiten Mischer (M2) der Demodulator (D) verbunden ist.

4. Funkgerät nach Anspruch 1, **dadurch gekennzeichnet**, daß der Mikroprozessor (M) im Ruhezustand der Empfängereinrichtung (E) die Funktion einer Sendersuchlaufeinrichtung übernimmt und abwechselnd alle oder einige Funkübertragungskanäle des schnurlosen Telefonapparats und des Funkrufsystems auf das Vorliegen eines Verbindungswunsches abtastet.

5. Funkgerät nach Anspruch 1, **dadurch gekennzeichnet,** daß im Mobilteil (MS) eine mit dem Mikroprozessor (M) verbundene Wählhilfe (W) angeordnet ist, welche die vom rufenden Teilnehmer kommenden oder vom Benutzer eingegebenen Daten oder Rufnummem in einem Speicher (SP) speichert, daß durch Betätigen einer Taste (T) die im Speicher (SP) gespeicherten Rufnummem und/oder Daten abgerufen und an einer mit der Wählhilfe (W) und dem Mikroprozessor (M) verbundenen Anzeigeeinrichtung (AE) dargestellt werden, und daß die Wählhilfe (W) den Verbindungsaufbau zum rufenden Teilnehmer steuert.

6. Funkgerät nach Anspruch 5, **dadurch gekennzeichnet,** daß die Wählhilfe (W) automatisch die vom rufenden Teilnehmer kommenden Rufnummern mit den im Speicher (SP) enthaltenen Rufnummem vergleicht und daß die Wählhilfe (W) nur die noch nicht als bereits vorhanden erkannten Rufnummem auf freie Speicherplätze des Speichers (SP) ablegt.

7. Funkgerät nach Anspruch 5 oder 6, **dadurch gekennzeichnet,** daß die Wählhilfe (W) im Falle übereinstimmender Rufnummem die dieser Rufnummer zugeordneten Daten aus dem Speicher (SP) ausliest und an der Anzeigeeinrichtung (AE) darstellt.

## Claims

1. Radio set for access to various radio services, with a mobile unit (MS) of a cordless telephone or with a telepoint-capable mobile unit (MS) and with a radio-paging receiver integrated within the mobile unit (MS), and with a circuit arranged in the mobile unit (MS) consisting of a microprocessor (M), operating elements (BE) and display elements (AE),
**characterised in that**
a single receiving device (E) arranged in the mobile unit is provided which comprises two mixers (M1, M2) and a demodulator (D), and a switching device (S) is arranged between the first mixer and the second mixer (M1, M2), as a result of which, on the one hand, access to various telecommunications services is made possible and, on the other hand, the configuration of modules of the receiver device (E) can be changed by the user or automatically by the microprocessor (M).

2. Radio set according to Claim 1, **characterised in that** the mobile unit (MS) comprises two aerials (A1, A2) and in that the switching device (S), the output of which is connected to the second mixer (M2), is connected either to the first mixer (M1) or to one of the two aerials (A1, A2).

3. Radio set according to Claim 1 or 2, **characterised in that** the first mixer (M1) is capable of being switched as an amplifier and in that the demodulator (D) is connected to the second mixer (M2).

4. Radio set according to Claim 1, **characterised in that** in the idle state of the receiver device (E) the microprocessor (M) takes over the function of a scan-tuning device and intermittently scans all or some radio-transmission channels of the cordless telephone and of the radio-paging system for the presence of a connection request.

5. Radio set according to Claim 1, **characterised in that** a dialling aid (W) connected to the microprocessor (M) is arranged in the mobile unit (MS) which stores in a memory (SP) the data or telephone numbers that come from the calling subscriber or that are input by the user, in that by actuation of a key (T) the telephone numbers and/or data stored in the memory (SP) are recalled and are displayed on a display device (AE) connected to the dialling aid (W) and the microprocessor (M), and in that the dialling aid (W) controls the set-up of the connection to the calling subscriber.

6. Radio set according to Claim 5, **characterised in that** the dialling aid (W) automatically compares the telephone numbers coming from the calling subscriber with the telephone numbers contained in the memory (SP) and in that the dialling aid (W) only saves in free storage locations of the memory (SP) those telephone numbers not yet detected as being already present.

7. Radio set according to Claim 5 or 6, **characterised in that** in the case of tallying telephone numbers the dialling aid (W) reads out from the memory (SP) the data assigned to this telephone number and represents them on the display device (AE).

## Revendications

1. Appareil radio pour accéder à différents services radio, comportant une partie mobile (MS) d'un téléphone sans fil ou une partie mobile (MS) permettant une transmission télépoint, et un récepteur d'appels radio intégré dans la partie mobile (MS), et un circuit disposé dans la partie mobile (MS) et constitué par un microprocesseur (M), des éléments d'actionnement (BE) et des éléments d'affichage (AE),
caractérisé en ce qu'il est prévu un seul dispositif récepteur (E) disposé dans la partie mobile et qui comporte deux mélangeurs (M1,M2) et un démodulateur (D), et qu'entre les premier et second mélangeurs (M1,M2) est disposé un dispositif de commutation (S), ce qui a pour effet que d'une part l'accès à différents services de télécommunication est possible et que d'autre part la configuration de modules du dispositif récepteur (E) peut être modifiée par l'utilisateur ou bien automatiquement par le microprocesseur (M).

2. Appareil radio selon la revendication 1, caractérisé en ce que la partie mobile (MS) comporte deux antennes (A1,A2) et que le dispositif de commutation (S), dont la sortie est connectée au second mélangeur (M2), est relié soit au premier mélangeur (M1), soit à l'une des deux antennes (A1,A2).

3. Appareil radio selon la revendication 1 ou 2, caractérisé en ce que le premier mélangeur (M1) peut être branché en tant qu'amplificateur et que le démodulateur est relié au second mélangeur (M2).

4. Appareil radio selon la revendication 1, caractérisé en ce que, lorsque le dispositif récepteur (E) est à l'état de repos, le microprocesseur (M) assume la fonction d'un dispositif de recherche d'émetteurs et explore alternativement la totalité ou quelques-uns des canaux de transmission hertziens du téléphone sans fil et du système d'appels radio pour détecter la présence éventuelle d'un souhait de liaison.

5. Appareil radio selon la revendication 1, caractérisé en ce que dans la partie mobile (MS) est disposé un système d'aide à la sélection (W), qui est relié au microprocesseur (M) et qui mémorise les données ou les numéros d'appel qui arrivent de l'abonné appelant ou sont introduits par l'abonné, dans une mémoire (SP), que les numéros d'appel et/ou les données, mémorisés dans la mémoire (SP), sont appelés au moyen de l'actionnement d'une touche (T) et sont représentés dans un dispositif d'affichage (AE), qui est relié au système auxiliaire de sélection (W) et au microprocesseur (M), et que le système d'aide à la sélection (W) commande l'établissement de la liaison avec l'abonné appelant.

6. Appareil radio selon la revendication 5, caractérisé en ce que le système d'aide à la sélection (W) compare automatiquement les numéros d'appel arrivants de l'abonné appelant aux numéros d'appel contenus dans la mémoire (SP) et que le système d'aide à la sélection (W) mémorise seulement les numéros d'appel identifiés comme n'étant pas encore présents, en des emplacements libres de la mémoire (SP).

7. Appareil radio selon la revendication 5 ou 6, caractérisé en ce que le système d'aide à la sélection auxiliaire (W) lit, dans le cas de numéros d'appel identiques, les données associées à ce numéro d'appel, à partir de la mémoire (SP) et les présente sur le dispositif d'affichage (AE).
